# EUROPÄISCHE PATENTSCHRIFT

(11) **EP 0 910 215 B1**
(45) Veröffentlichungstag und Bekanntmachung des Hinweises auf die Patenterteilung: **26.07.2006**
(21) Anmeldenummer: 98119045.7
(22) Anmeldetag: 08.10.1998
(51) Int. Cl.: H04N 7/16

(54) **Vorrichtung zur Freigabeprogrammierung für ein Gerät der Unterhaltungselektronik und/oder der Kommunikationstechnik.**
Program authorizing circuit for consumer electronics and/or communications technology.
Circuit d'autorisation de programmes pour électronique grand public et/ou technologies de la communication.

(30) Priorität: 14.10.1997 DE 19745357
(43) Veröffentlichungstag der Anmeldung: 21.04.1999
(73) Patentinhaber: Grundig Multimedia B.V., 1083HJ Amsterdam (NL)
(72) Erfinder: Reiss, Willy Grundig AG, 90762 Fuerth (DE)
(74) Vertreter: Pröll, Jürgen

(56) Entgegenhaltungen:
- EP-A- 0 776 132
- WO-A-96/06501
- WO-A-96/25821
- DE-U- 29 620 150
- US-A- 5 231 661
- US-A- 5 331 353
- US-A- 5 382 983
- US-A- 5 477 262

## Beschreibung

Die Erfindung betrifft eine Vorrichtung zur Freigabeprogrammierung für ein Gerät der Unterhaltungselektronik und/oder der Kommunikationstechnik, insbesondere für ein Fernsehgerät, ein Videoaufzeichnungs- und/oder Wiedergabegerät, ein Audioaufzeichnungs- und/oder Wiedergabegerät und/oder für einen Computer.

Eine derartige Vorrichtung ist beispielsweise aus DE 296 20 150 bekannt. Die dort vorgeschlagene Schaltungsanordnung weist zwei programmierbare Speichermodule zur Speicherung von Programminformationen auf, wobei das erste Speichermodul zur Speicherung der Programminformationen der zur Sperrung bestimmten Programme und ein zweites Speichermodul zur Speicherung der Programminformationen der zur Freigabe bestimmten Programme vorgesehen ist. Mit Hilfe einer Auswahllogikschaltung wird unter Auswertung von zusammen mit dem Fernsehprogramm übertragenen Zusatzinformationen das ausgewählte Programm entweder freigegeben oder gesperrt.

Der Erfindung liegt die Aufgabe zugrunde, eine Vorrichtung der eingangs genannten Art anzugeben, das auf einfache Weise insbesondere Kindern und Jugendlichen eine altersgemäße und dennoch individuelle Nutzung des Geräts ermöglicht.

Diese Aufgabe wird durch eine Vorrichtung mit den im Anspruch 1 angegebenen Merkmalen gelöst.

Aus WO 96/06501 A1 ist eine Einrichtung zur elterlichen Kontrolle der TV-Nutzung durch Ausschluss oder Einschluss ausgewählter Programme, Kanäle oder Zeiten bekannt. Die Einrichtung weißt eine Steuereinheit, bestehend aus einem Microprozessor, einem ROM-Speicher, einem Speicher für die Identifizierungsnummer, einen Rechner für die ausgewählten Programme, Kanäle, Daten und Zeiten, eine Eingabeeinheit zur Eingabe von Identifizierungscodes und eine Uhr zum Zeitvergleich auf.

Aus WO 96/25821 A1 ist ein interaktives Fernsehsystem mit einem Zentralgerät, einer Vielzahl von Endgeräten, einer Vielzahl von Anzeigegeräten und einer Vielzahl von Fernsehsteuergeräten offenbart. Die Endgeräte sind jeweils zur bidirektionalen Datenkommunikation mit dem Zentralgerät über ein digitales Datenkommunikationsnetz und jeweils zum Empfangen von Daten durch eine drahtlose Kommunikationsverbindung verbunden.

Aus US 5,331,353 A1 ist eine Vorrichtung aufgezeigt, welche zwischen die Netzstromversorgung in das Gerät eingefügt ist. Über diese Kontrollvorrichtung kann die Benutzung des Endgerätes, beispielsweise eines Fernsehgerätes, zeitlich beschränkt werden.

Aus EP 0776132 ist eine Interaktive Fernsehvorrichtung aufgezeigt, die eine Identifikationseinrichtung aufweist, die zu identifikation des jeweiligen Nutzers des Vorrichtungs vorgesehen ist.

Der Erfindung liegt die Erkenntnis zugrunde, daß die Nutzer von Geräten der Unterhaltungselektronik oder Kommunikationstechnik häufig mit dem (Über-) Angebot an Programmen und Nutzungsmöglichkeiten häufig überfordert sind. Dies gilt sowohl für Erwachsene, aber ganz besonders für Kinder und Jugendliche. Ziel der vorliegenden Erfindung ist daher, den Benutzer derartiger Geräte mit einer derartigen Vielfalt an Programmangeboten nicht allein zu lassen, sondern ihm beim Betrieb derartiger Geräte eine Hilfestellung zu geben, einen den jeweiligen Sehgewohnheiten und einer altersgemäßen Einstufung einen planvollen Umgang mit den Unterhaltungselektronik- bzw. Kommunikationsgerät zu ermöglichen. Die Vorrichtung zur Freigabeprogrammierung kann dabei einem Gerät der Unterhaltungselektronik oder der Kommunikationstechnik vorgeschaltet sein oder in diesen integriert sein. Die Freigabeprogrammierung erfolgt in folgenden Schritten:

Mit Hilfe einer Anzeigevorrichtung, die an der Vorrichtung zur Freigabeprogrammierung selbst oder auch Teil des Geräts der Unterhaltungselektronik bzw. der Kommunikationstechnik sein kann, erfolgt die Anzeige eines Menüs zur Vorgabe einer Funktionsfreigabe des Geräts für einen vorgebbaren Zeitraum. So kann beispielsweise von den Eltern eines Kindes für ein beispielsweise sechsjähriges Kind ein täglicher TV-Konsum von einer Stunde freigegeben werden, wobei auch eine nach Wochentagen individuelle Vorgabe bestimmter Funktionsfreigaben erfolgen kann. Die so eingegebenen Freigabedaten werden in einem Speicher der Vorrichtung zur Freigabeprogrammierung gespeichert und gesteuert von einer Steuereinrichtung der Vorrichtung erfolgt bei der Nutzung des Geräts der Unterhaltungselektronik oder der Kommunikationstechnik durch das Kind eine Funktionsfreigabe lediglich für den vorher von den Eltern einprogrammierten Zeitraum. Eine Verriegelungsvorrichtung in der Vorrichtung zur Freigabeprogrammierung stellt sicher, daß der Zugriff auf das Menü zur Funktionsfreigabe lediglich von den dafür autorisierten Personen, beispielsweise von den Eltern, erweitert oder neu programmiert werden kann. Grundprinzip dieser Vorrichtung zur Freigabeprogrammierung ist somit eine Abkehr von einem Sperren bzw. von einem Verbot zum Betreiben des Geräts der Unterhaltungselektronik oder der Kommunikationstechnik, der Nutzer, beispielsweise das Kind bzw. der Jugendliche, sollen vielmehr in verantwortungsvoller Weise selbst einen planvollen Umgang mit derartigen Medien erfahren.

Eine Vereinfachung bei der Programmierung der Vorrichtung ergibt sich dadurch, daß die Vorrichtung eine Auswerteeinrichtung zur Auswertung von gemeinsam mit dem jeweiligen Programm oder separat übertragenen Zusatzinformationen aufweist. Bei den Zusatzinformationen handelt es sich beispielsweise um die Anfangs- und Endzeiten der jeweiligen Sendungen, den Titel und/oder auch um eine Kennung für die Geeignetheit der Sendungen für bestimmte Altersgruppen. Die Zusatzinformationen können beispielsweise als bekannte Videotextsignale in den Fernsehsignalen enthalten sein oder aus beispielsweise über Funk, insbesondere als DAB-Daten unabhängig von dem jeweiligen Programm übertragenen werden.

Eine möglichst genaue Auswahl bestimmter Sendungen wird dadurch ermöglicht, daß die Zusatzinformationen zur Erzeugung eines weiteren Menues zur Freigabe von Programmen und/oder von Sendungen vorgesehen sind. Anhand der beispielsweise auf einem Bildschirm angezeigten Informationen, wie Dauer, Titel etc. können sowohl die Personen, die die Funktionsfreigabe programmieren, beispielsweise die Eltern, als auch die Personen, für die die Funktionsfreigabe erfolgen soll, also beispielsweise die Kinder Sendungen entsprechend den jeweiligen Rahmenbedingungen wie Zeitkontingent und Geeignetheit auswählen.

Die Überschaubarkeit geeigneter Sendungen für die zu bedienende Personengruppe wird auf einfache Weise dadurch erhöht, daß die Vorrichtung eine in der Zusatzinformation enthaltene Kennungsinformation auswertet, die zur Kennzeichnung der für Kinder und/oder Jugendliche geeigneten Sendungen vorgesehen ist. Hierdurch wird der Auswahlvorgang von vorne herein nur auf Sendungen gerichtet, die für die zu bedienende Personengruppe geeignet sind.

Der Programmierungsvorgang sowohl bei der Freigabeprogrammierung selbst als auch bei einem späteren Zugriff auf die freigegebenen Sendungen kann dadurch wesentlich vereinfacht werden, daß die Vorrichtung eine ldentifikationseinrichtung aufweist, die zur Identifikation des jeweiligen Nutzers der Vorrichtung vorgesehen ist.

Möglichkeiten für eine Authentifizierung des jeweiligen Nutzers sind, daß die ldentifikationseinrichtung als Datenkarte, als in einem Ein-/Aus-Schalter des Geräts der Vorrichtung integrierte Fingerabdruckleseeinrichtung oder als Videokamera mit zugehöriger Auswerteeinrichtung ausgebildet ist.

Nach Vorgabe lediglich eines Zeitkontingents kann die Programmierung zur Auswahl bestimmter Sendungen dadurch vereinfacht werden, daß die Steuerungseinrichtung in Abhängigkeit des vorgegebenen Zeitraums die übertragenen Zusatzinformationen nach Sendungen auswertet, deren Zeitdauer innerhalb des vorgegebenen Zeitraums liegt.

Die Programmierung kann dabei bedarfsindividuell zweistufig derart erfolgen, daß die Vorrichtung Mittel zum Betrieb in einer ersten und einer zweiten Betriebsart aufweist, wobei in der ersten Betriebsart der Zeitraum für die Funktionsfreigabe vorgebbar ist, und in der zweiten Betriebsart Sendungen entsprechend dem in der ersten Betriebsart vorgebbaren Zeitraum auswählbar sind. Damit können beispielsweise die Eltern in der ersten Betriebsart ohne Beteiligung des Kindes bzw. der Kinder ein bestimmtes Zeitkontingent vorgeben, während das Kind bzw. die Kinder ohne Beteiligung der Eltern in der zweiten Betriebsart völlig selbständig im Rahmen der Funktionsfreigaben eine weitere Programmauswahl treffen kann bzw. können.

Die Programmierung der Vorrichtung kann auf einfache Weise dadurch erfolgen, daß die Anzeigeeinrichtung der Bildschirm eines Fernsehgeräts und/oder eines Computers ist und daß zur Eingabe des vorgebbaren Zeitraums eine Fernbedienung des Fernsehgeräts bzw.eine Tastatur des Computers vorgesehen ist.

Im folgenden wird die Erfindung anhand der in den Figuren dargestellten Ausführungsbeispiele näher beschrieben und erläutert.

Es zeigen:
- Fig. 1: ein erstes Ausführungsbeispiel eines Geräts der Unterhaltungselektronik,
- Fig. 2: ein Ausführungsbeispiel eines Zusatzgeräts und
- Fig. 3: einen Bildschirmausschnitt mit Auswahlmenue unter Verarbeitung von Programminformationen.

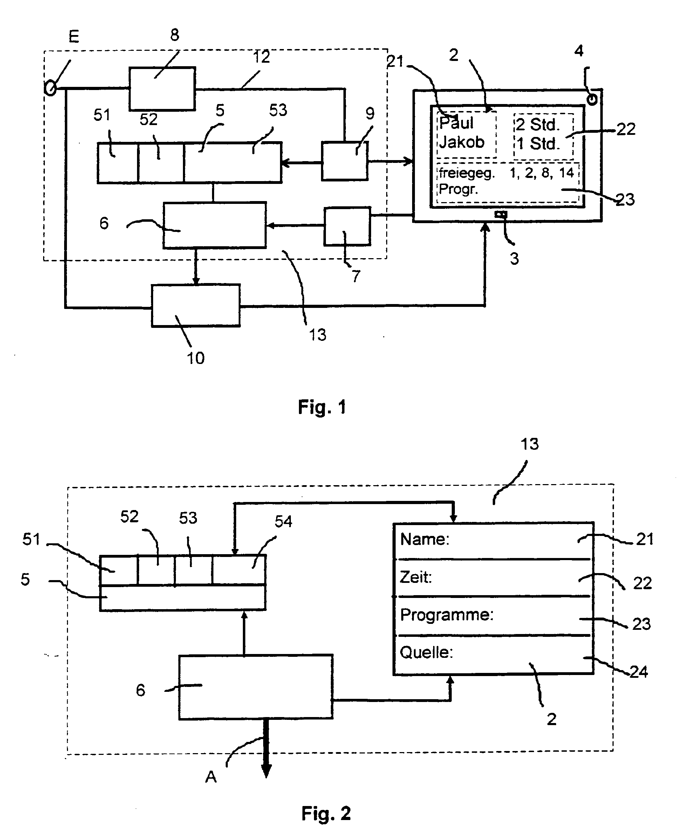

Fig. 1 zeigt ein Fernsehgerät 1, 13, das aus einem Fernsehempfangsteil 10, einem Bildschirm 1 sowie einer Vorrichtung 13 zur Freigabeprogrammierung des Fernsehgeräts aufweist. Das Fernsehgerät 1, 10, 13 weist einen Eingang E zum Empfang von Fernsehsignalen auf. Der Femsehempfangsteil 10 enthält sämtliche bekannten Komponenten, die zum Empfang und zur Aufbereitung von Fernsehsignalen erforderlich sind. Aus Gründen der Übersichtlichkeit wird auf eine detaillierte Darstellung dieser bekannten Komponenten verzichtet. Die Vorrichtung zur Freigabeprogrammierung enthält eine Auswerteeinrichtung 8 zur Auswertung von zusammen mit den empfangenen Fernsehsignalen übertragenen Zusatzinformationen, die am Ausgang der Auswerteeinrichtung vorliegenden Zusatzinformationen 12 werden über einen Zeichengenerator 9 zur Darstellung auf der Anzeigevorrichtung 2 des Bildschirms 1 aufbereitet. Die Freigabevorrichtung 13 enthält darüberhinaus eine Steuereinrichtung 6, einen Speicher 5, der einzelne Speicherbereiche 51, 52, 53 aufweist, sowie eine Verriegelungseinrichtung 7. Im Fernsehgerät sind darüberhinaus ein Ein/Ausschalter 3, eine Videokamera 4 vorgesehen. Der Bildschirm 2 ist in Bildschirmbereiche 21, 22, 23 zur Darstellung eines Freigabemenüs unterteilt.

Ziel des in Fig. 1 dargestellten Fernsehgeräts ist es, Kindern und Jugendlichen in einem vorgegebenen Rahmen einen eigenverantwortlichen Umgang mit dem Medium Fernsehen zu ermöglichen. Hierzu wird mit Hilfe der Freigabeeinrichtung nach Eingabe eines Codewortes das Freigabemenü auf dem Bildschirm 2 aufgerufen. Im Bildschirmfeld 21 kann daraufhin die Eingabe der Personen, die für die Benutzung des Freigabemodus autorisiert werden sollen, eingegeben werden, wie dies in Fig. 1 anhand der beispielhaften Namen Paul und Jakob erfolgt ist. Diesen Namen können dann jeweils bestimmte Zeitgabe zugeordnet werden, die beispielsweise die Zeiten kennzeichnen, die für den täglichen TV-Konsum von Paul und Jakob zur Verfügung gestellt werden sollen. Dies ist im Bildschirmteil 23 durch die Angabe "2 Stunden bzw. 1 Stunde" symbolisiert. Zusätzlich ist im Bildschirmfeld 23 die Eingabe bestimmter freigegebener Programme möglich, in Fig. 1 beispielsweise die Programme 1, 2, 8, 14, das so programmierte Bildschirmmenü zur Freigabe des Fernsehgeräts wird anschließend im Speicher 5 in den Speicherfeldern 51, 52, 53 gespeichert, wobei das Speicherfeld 51 der Eingabe im Bildschirmfeld 21, das Speicherfeld 52 der Eingabe im Bildschirmfeld 22 und das Speicherfeld 53 der Eingabe im Bildschirmfeld 23 entspricht. Anschließend ist das Fernsehgerät 1, 10, 13 vorprogrammiert, das die Nutzer Paul und Jakob eine Freigabe für das Fernsehgerät lediglich im Rahmen der programmierten Freigabe erhalten. Zu vergleichen ist der Effekt einer derartigen Programmierung beispielsweise damit, daß Kindern ein wöchentliches Taschengeld zur Verfügung gestellt wird, über das sie dann selbständig bzw. im Rahmen bestimmter Vorgaben verfügen können. Ähnlich wie beim Beispiel Taschengeld ist es darüberhinaus möglich, daß bei Nichtnutzung bestimmter Zeitkontingente innerhalb einer Woche das entsprechende Zeitkontingent zum neuen Zeitkontingent addiert werden kann. Insgesamt ergibt sich durch die in Fig. 1 dargestellte Freigabeeinrichtung und das zugehörige Fernsehgerät 1, 10, 13 somit die Möglichkeit einer einfachen Programmierung sowohl für die Eltern als auch eines eigenverantwortlichen Fernsehens für Kinder und Jugendliche. Anstelle der Vorgabe eines Codewortes zur Aktivierung des Freigabemenüs bzw. zur Identifizierung der jeweiligen Nutzer, beispielsweise Paul und Jakob, ist es möglich, daß in der Ein/Ausschalteinrichtung 3 eine Einrichtung zur Detektion des Fingerabdrucks und damit zur Identifizierung des jeweiligen Nutzers vorgesehen ist, Alternativ ist darüberhinaus auch möglich, daß mit Hilfe der Videokamera 4 eine Auswertung des Gesichts oder von Gesichtsteilen, wie beispielsweise eine Irisauswertung erfolgt. Hierdurch wird der Zugriff für die Benutzer nochmals erheblich erleichtert. Alternativ zur Codeeingabe bzw. zur Authentisierung mittels Ein/Aus-Schalter oder Videokamera ist darüberhinaus die Verwendung einer Datenkarte möglich.

Fig. 2 zeigt ein weiteres Ausführungsbeispiel einer Einrichtung zur Freigabeprogrammierung, die beispielsweise als Zusatzgerät 13 zum Anschluß an ein Fernsehgerät, einen Videorecorder, einen CD-Spieler oder einen Computer oder ein Kombinationsgerät derartiger Einzelgeräte vorgesehen ist. Die Freigabeeinrichtung 13 besteht aus einer Anzeigeeinrichtung 2, aus einem Speicher 5 sowie aus einer Steuereinrichtung 6, die Funktionsweise der Freigabeeinrichtung entspricht dabei im wesentlichen der bereits im Zusammenhang mit Fig. 1 erwähnten Funktionsbeschreibung. So kann der Benutzer beispielsweise über eine in Fig. 2 nicht extra dargestellte Tastatur oder Fernbedienung im Anzeigefeld 21 den Namen, im Anzeigefeld 22 den vorgegebenen Zeitrahmen, im Anzeigefeld 23 bestimmte Programme und im Anzeigefeld 24 zusätzlich die jeweilige Programmquelle für eine Freigabeprogrammierung auswählen. Die so eingegebenen Daten werden in den Speicherfeldern 51, 52, 53, 54 des Speichers 5 abgespeichert und gesteuert durch die Steuereinrichtung 6 an einen Ausgang A der Freigabeeinrichtung 13 übermittelt.

Durch die Programmierung der Freigabeeinrichtung 13 ist der Betrieb, der im Feld 24 definierten Quellen somit lediglich im Rahmen der in der Anzeigeeinrichtung 2 programmierten Vorgaben möglich. Bei der Vorgabe der Zeit im Feld 22 ist an Stelle einer täglichen Vorgabe bestimmter Zeiten auch eine wöchentliche oder monatliche Vorgabe von Zeiten möglich. Insgesamt ergibt sich mit Hilfe der in Fig. 2 dargestellten Einrichtung 13 die Möglichkeit, Kindern und Jugendlichen einen eigenverantwortlichen Umgang mit einem bestimmten Zeitkontingent und Quellenkontingent zu ermöglichen, wobei zusätzliche, beispielsweise vom Sender vorgegebene Freigabeempfehlungen nicht erforderlich sind.

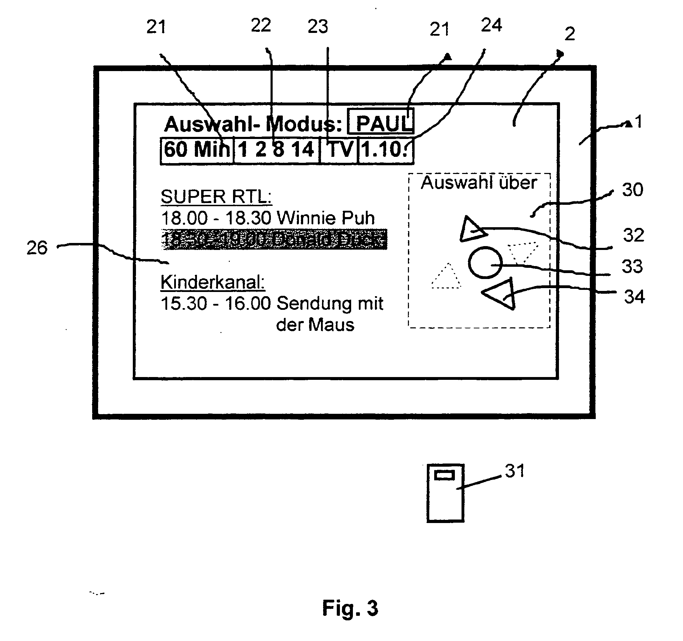

Fig. 3 zeigt einen Bildschirm 2 eines Fernsehgeräts 1. Das Fernsehgerät 1 ist mittels eines Fernbedienungsgebers 31 fernbedienbar. Der Bildschirm 2 zeigt ein Bildschirmmenü, welches aus Bildbestandteilen 21, 22, 23, 24, 25,.26, 30 besteht. Ein derartiges Bildschirmmenü dient der Programmierung der Freigabeeinrichtung (vergl. Fig. 1 und Fig. 2) nach einer bereits erfolgten ersten Grundprogrammierung, in der beispielsweise von den Eltern die Freigabedaten eingegeben wurden und nunmehr in einem zweiten Betriebsmodus von den Kindern und/oder Jugendlichen eine gezielte Auswahl im Rahmen des vorgegebenen Zeitkontingents 22 etc. erfolgen soll. Hierzu ist im Bildschirmbereich 21 der Name des jeweiligen Nutzers, im Bildschirmbereich 22 die vorgegebene Zeitdauer, im Bildschirmbereich 23 die freigegebenen Programme und im Bildschirmbereich 24 die freigegebene Signalquelle angegeben. Im Bildschirmbereich 25 ist darüberhinaus das aktuelle Datum vorgesehen, während im Bildschirmbereich 26 aus Zusatzdaten dem Kind bzw. dem Jugendlichen bestimmte Sendungen zur weiteren Programmierung im Rahmen des vorgegebenen Zeitkontingents angeboten werden. Die Programmierung erfolgt derart, daß mittels eines Cursorkreuzes 32 auf der Fernbedienung 31, welches zur Deutlichmachung in einem Bildschirmbereich 30 auf dem Bildschirm eingeblendet ist, die jeweils gewünschten Sendungen programmiert werden können. Hierzu kann der jeweilige Beitrag mit Hilfe der Cursorsteuerungstasten 33, 34 ausgewählt und durch die Bestätigungstaste 35 gespeichert werden. Nach einer gespeicherten Sendung werden dem Nutzer die dann noch verbleibenden Möglichkeiten im Rahmen des Zeitkontingents angezeigt.

Zusammenfassend betrifft die Erfindung somit ein Gerät der Unterhaltungselektronik oder der Kommunikationstechnik, insbesondere ein Fernsehgerät, ein Videoaufzeichnungs- und/oder Wiedergabegerät, ein Audioaufzeichnungs- und/oder Wiedergabegerät oder einen Computer. Derartige Geräte werden zunehmend auch von sehr jungen Kindern benutzt. In vielen Fällen besteht die Gefahr, daß Kinder und Jugendliche durch zu lange Nutzungszeiten Schaden nehmen und in ihrer Entwicklung beeinträchtigt werden. Andererseits ist es auch für Kinder und Jugendliche wichtig, einen maßvollen Umgang mit derartigen Geräten zu lernen. Der Erfindung liegt daher die Aufgabe zugrunde, auf einfache Weise einen überschaubaren und planvollen Umgang mit derartigen Geräten zu ermöglichen. Das Gerät 1 weist hierzu Mittel 2 zur Anzeige eines Menues zur Vorgabe einer Funktionsfreigabe des Gerätes 1 für einen vorgebbaren Zeitraum 22 aufweist. Das Gerät 1 weist weiter einen Speicher 5 zur Speicherung von die Funktionsfreigabe kennzeichnenden Daten 51, 52, 53, eine Steuereinrichtung 6 zur Steuerung der Funktionsfreigabe in Abhängigkeit des durch das Menue vorgegebenen Zeitraums 22 und eine Verriegelungseinrichtung 7 zur Verriegelung des Zugriffs auf das Menue zur Funktionsfreigabe auf. Kinder und Jugendliche sollen Geräte der Unterhaltungselektronik und der Kommunikationstechnik hierdurch weniger unter dem Gesichtspunkt von Verboten kennenlernen, sondern einen sinnvollen Umgang mit derartigen Geräten unter Gesichtspunkt einer positiven Auswahl und Freigabe zu erlernen.

## Patentansprüche

1. Vorrichtung zur Freigabeprogrammierung eines Geräts (1) der Unterhaltungselektronik und/oder der Kommunikationstechnik, insbesondere eines Fernsehgeräts, Videoaufzeichnungs- und/oder Wiedergabegeräts, Audioaufzeichnungs- und/oder Wiedergabegeräts und/oder eines Computers,
- mit einer Anzeigevorrichtung (2) zur Anzeige eines Menues zur Vorgabe einer Funktionsfreigabe des Gerätes (1) für einen vorgebbaren Zeitraum,
- mit einem Speicher (5) zur Speicherung von die Funktionsfreigabe kennzeichnenden Daten (51, 52, 53),
- mit einer Steuereinrichtung (6) zur Steuerung der Funktionsfreigabe in Abhängigkeit des durch das Menue vorgegebenen Zeitraums (22) und
- mit einer Verriegelungsvorrichtung (7) zur Verriegelung des Zugriffs auf das Menue zur Funktionsfreigabe,
- mit einer Auswerteeinrichtung (8) zur Auswertung von gemeinsam mit dem jeweiligen Programm übertragenen Zusatzinformationen, wobei
- die Zusatzinformationen zur Erzeugung eines weiteren Menues zur Freigabe von Programmen und/oder von Sendungen vorgesehen sind,
**dadurch gekennzeichnet, dass**
die Zusatzinformation eine Kennungsinformation aufweist, die zur Kennzeichnung der für Kinder und/oder Jugendliche geeigneten Sendungen vorgesehen ist,
die Vorrichtung eine Identifikationseinrichtung (3, 4, 11) aufweist, die zur Identifikation des jeweiligen Nutzers der Vorrichtung vorgesehen ist und
die Steuerungseinrichtung (6) in Abhängigkeit des vorgegebenen Zeitraums (22) und die übertragenen Zusatzinformationen (12) nach Sendungen auswertet, deren Zeitdauer innerhalb des vorgegebenen Zeitraums (22) liegt.

2. Vorrichtung nach Anspruch 1,
**dadurch gekennzeichnet, dass**
die Identifikationseinrichtung (3, 4, 11) als Datenkarte (11), als in einem Ein-/Aus-Schalter (3) des Geräts (1) oder der Vorrichtung integrierte Fingerabdruckleseeinrichtung oder als Videokamera (4) mit zugehöriger Auswerteeinrichtung ausgebildet ist.

3. Vorrichtung nach einem der Ansprüche 1 oder 2,
**dadurch gekennzeichnet, dass**
die Vorrichtung Mittel zum Betrieb in einer ersten und einer zweiten Betriebsart aufweist, wobei in der ersten Betriebsart der Zeitraum (22) für die Funktionsfreigabe vorgebbar ist, und in der zweiten Betriebsart Sendungen entsprechend dem in der ersten Betriebsart vorgebbaren Zeitraum (22) auswählbar sind.

4. Vorrichtung nach einem der Ansprüche 1 bis 3,
**dadurch gekennzeichnet, dass**
die Anzeigeeinrichtung (2) der Bildschirm eines Fernsehgeräts und/oder eines Computers ist und zur Eingabe des vorgebbaren Zeitraums (22) eine Fernbedienung (31) des Fernsehgeräts bzw. eine Tastatur des Computers vorgesehen ist.

5. Gerät (1) der Unterhaltungselektronik und/oder der Kommunikationstechnik, insbesondere Fernsehgerät, Videoaufzeichnungs- und/oder Wiedergabegerät, Audioaufzeichnungs- und/oder Wiedergabegerät und/oder Computer mit einer Vorrichtung nach einem der Ansprüche 1 bis 4.

## Claims

1. Device for programming to enable an item of equipment (1) of entertainment electronics and/or communications technology, in particular a television set, an item of video recording or playback equipment, an item of audio recording and/or playback equipment and/or a computer
- with a display device (2) for displaying a menu for presetting functional enabling of the item of equipment (1) for a presettable period of time,
- with a memory (5) for storing data (51, 52, 53) flagging the functional enabling,
- with a control apparatus (6) for controlling the functional enabling as a function of the period of time (22) preset by the menu and
- with a locking device (7) for locking access to the menu for functional enabling,
- with an evaluating apparatus (8) for evaluating additional information transmitted jointly with the respective program, wherein
- the additional information is provided for generating a further menu for enabling programs and/or transmissions,
**characterised in that**
the additional information has an item of identity information, provided to flag the transmissions suitable for children and/or young people,
the device has an identification apparatus (3, 4, 11) provided for identifying the respective user of the device and
the control apparatus (6) evaluates transmissions whose duration is within the preset period of time (22) as a function of the preset time period (22) and according to the transmitted additional information (12).

2. Device according to claim 1, **characterised in that** the identification apparatus (3, 4, 11) is designed as a data card (11), as a fingerprint read apparatus integrated in an on/off switch (3) of the item of equipment (1) or the device or as a video camera (4) with associated evaluation apparatus.

3. Device according to one of claims 1 or 2, **characterised in that** the device has means for operating in a first and a second operating mode, wherein in the first operating mode the period of time (22) for the functional enabling can be preset and in the second operating mode transmissions can be selected according to the period of time (22) presettable in the first operating mode.

4. Device according to one of claims 1 to 3, **characterised in that** the display apparatus (2) is the screen of a television set and/or a computer and a remote control (31) of the television set or a keyboard of the computer is provided for input of the presettable period of time (22).

5. Item of equipment (1) of entertainment electronics and/or communications technology, in particular a television set, an item of video recording and/or playback equipment, an item of audio recording and/or playback equipment and/or a computer with a device according to one of claims 1 to 4.

## Revendications

1. Dispositif d'autorisation de programmation d'un appareil (1) de l'électronique de divertissement et/ou de la technique de communication, en particulier un téléviseur, un appareil d'enregistrement et/ou de reproduction vidéo, un appareil d'enregistrement et/ou de reproduction audio et/ou un ordinateur,
- équipé d'un dispositif d'affichage (2) pour afficher un menu afin de déterminer une autorisation de fonctionnement de l'appareil (1) pour une période de temps prédéterminée,
- équipé d'une mémoire (5) pour mémoriser des données (51, 52, 53) caractérisant l'autorisation de fonctionnement,
- équipé d'un dispositif de commande (6) pour commander l'autorisation de fonctionnement selon une période de temps (22) prédéterminée par le menu et
- équipé d'un dispositif de verrouillage (7) pour verrouiller l'accès au menu pour l'autorisation de fonctionnement,
- équipé d'un dispositif d'évaluation (8) pour une évaluation par les informations supplémentaires transmises conjointement avec le programme respectif, où
- les informations supplémentaires sont prévues pour afficher un autre menu en vue de l'autorisation de programmes et/ou d'émissions,
**caractérisé en ce que**
l'information supplémentaire présente une information caractéristique, qui est prévue pour la caractérisation des émissions appropriées pour les enfants et/ou la jeunesse, le dispositif présente un système d'identification (3, 4, 11), qui est prévu pour l'identification de l'utilisateur respectif du dispositif et
le dispositif de commande (6) ainsi que les informations supplémentaires transmises (12) évaluent selon la période de temps prédéterminée (22) les émissions, dont la durée se trouve à l'intérieur de la période de temps prédéterminée (22).

2. Dispositif selon la revendication 1, **caractérisé en ce que** le système d'identification (3, 4, 11) est réalisé sous la forme d'une carte de données (11), sous la forme d'un dispositif de lecture d'empreintes digitales intégré dans un commutateur MARCHE/ARRET (3) de l'appareil (1) ou du dispositif ou sous la forme d'une caméra vidéo (4) avec le dispositif d'évaluation associé.

3. Dispositif selon l'une des revendications 1 ou 2, **caractérisé en ce que** le dispositif présente des moyens pour un fonctionnement dans un premier et un second modes, où, dans le premier mode, la période de temps (22) pour l'autorisation de fonctionnement peut être déterminée, et, dans le second mode, des émissions peuvent être choisies conformément à la période de temps (22) pouvant être déterminée dans le premier mode.

4. Dispositif selon l'une des revendications 1 à 3, **caractérisé en ce que** le dispositif d'affichage (2) est l'écran d'un téléviseur et/ou d'un ordinateur et une télécommande (31) du téléviseur ou un clavier de l'ordinateur est prévu(e) pour la saisie de la période de temps prédéterminée (22).

5. Appareil (1) de l'électronique de divertissement et/ou de la technique de communication, en particulier un téléviseur, un appareil d'enregistrement et/ou de reproduction vidéo, un appareil de reproduction et/ou de reproduction audio et/ou un ordinateur équipé d'un dispositif selon l'une des revendications 1 à 4.
